# EUROPEAN PATENT APPLICATION

(11) **EP 2 905 180 A1**
(43) Date of publication of application: **12.08.2015**
(21) Application number: 12885986.5
(22) Date of filing: 01.10.2012
(51) Int. Cl.: B60R 16/02

(54) **ELECTRIC VEHICLE CONTROL DEVICE**

(71) Applicant: Hitachi Automotive Systems, Ltd., Hitachinaka-shi, Ibaraki 312-8503 (JP)
(72) Inventor: OTSU Eiichi, Hitachinaka-shi Ibaraki 312-8503 (JP)
(74) Representative: MERH-IP Matias Erny Reichl Hoffmann
(86) International application number: PCT/JP2012/075301
(87) International publication number: WO 2014/054089

(57) **Abstract**

It is possible to, by checking a timer function in advance, make diagnosis on the power supply function by means of an alarm signal output by a clock IC before a driver leaves a driver's seat to induce the driver to repair and to switch over to a way where the relevant function is not used.

An electric vehicle control device, which has at least a start signal for a vehicle and an alarm signal by a clock as means for initiating power supply, checks an output of the alarm signal by the clock after start-up by the power supply, holds the output of the alarm signal until start signals other than the alarm are all turned off, and notifies of the power supply being continued by way of the alarm signal whose output is held after the start signals other than the alarm are turned off.

## Description

### Technical Field

The present invention relates to a control device for a vehicle or the like running on an electric motor, and particularly to a control device for a vehicle or the like which includes means for initiating power supply by way of an alarm signal output by a clock.

### Background Art

For example, as disclosed in Patent Literature 1, there have been known, as an electronic control device for a vehicle, those which measure a time during which a system starting switch is off and diagnose time measurement means by turning back a time or the like.

### Citation List

### Patent Literature

Patent Literature 1: JP Patent Publication (Kokai) No. 2007-145235

### Summary of Invention

### Technical Problem

In the related art, whether or not measurement of a time during which a start signal for a vehicle is off is abnormal is diagnosed, but diagnosis needs to be made on a power supply function exerted by means of an alarm signal output issued after a predetermined time interval.

### Solution to Problem

An electric vehicle control device having at least a start signal for a vehicle and an alarm signal by a clock as means for initiating power supply, includes first means that checks an output of the alarm signal by the clock after start-up by the power supply, second means that holds the output of the alarm signal until start signals other than the alarm are all turned off, and third means that notifies of the power supply being continued by way of the alarm signal whose output is held after the start signals other than the alarm are turned off.

The electric vehicle control device includes monitor means that has at least means that monitors a notification signal notifying of the power supply being continued, means that issues a warning by means of display or sound if there is no notification signal, and second power supply means different from the power supply means.

The electric vehicle control device also includes means that prohibits devices from stopping if the monitor means issues a warning, the stopping being caused by the start signals other than the alarm being all turned off.

### Advantageous Effects of Invention

According to the present invention, it is possible, in a case where an abnormality is found in a power supply function exerted by means of an alarm signal output issued after a predetermined time interval after a start signal for a vehicle is off, to inform of failure or switch over to a way where the relevant function is not used before a driver leaves the vehicle.

### Brief Description of Drawings

[Figure 1] Figure 1 is a schematic configuration diagram showing an embodiment of a control device for a vehicle or the like.
[Figure 2] Figure 2 is a flowchart showing an example of a program executed when an IGN 6 is turned on.
[Figure 3] Figure 3 is a flowchart showing power supply diagnosis processing on start-up.
[Figure 4] Figure 4 is a flowchart showing a setting process procedure for checking an alarm function.
[Figure 5] Figure 5 is a flowchart showing processing on an ECU side for diagnosis on the power supply function exerted by means of the alarm function.
[Figure 6] Figure 6 is a flowchart showing processing by a meter.
[Figure 7] Figure 7 is a flowchart showing processing on a meter side for diagnosis on the power supply function exerted by means of the alarm function.

### Description of Embodiments

Next, a description is given of embodiments of the invention with reference to the drawings.

Hereinafter, a description is given of embodiments of a vehicle control device according to the invention with reference to the drawings.

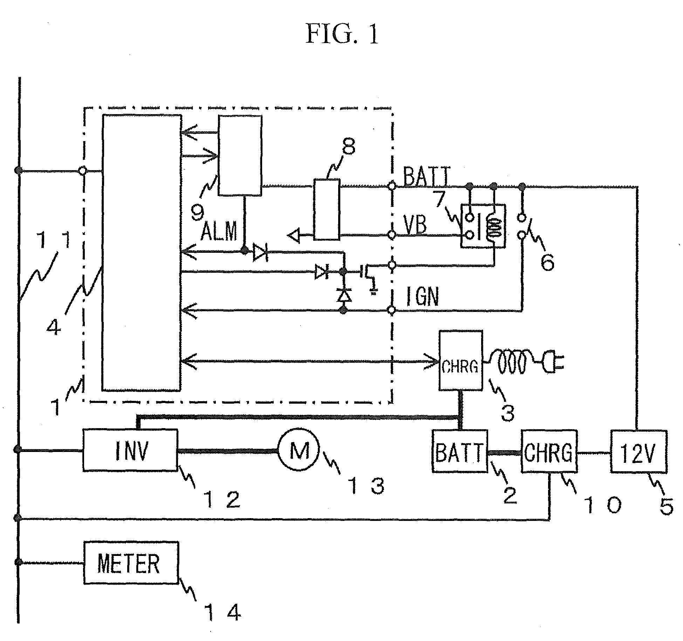

Figure 1 is a schematic configuration diagram showing an embodiment of a control device-for a vehicle or the like according to the invention. A vehicle control device (ECU 1) according to this embodiment performs various controls, in a vehicle having a high-tension battery 2 mounted thereon, such as control of a battery charger 3, and includes a microcomputer 4 as a main component thereof. The ECU 1 is supplied from a low-tension battery 5 with a voltage BATT (12V) directly and always and a voltage VB via a power supply relay 7 operated in conjunction with a system starting switch (IGN 6). In the ECU 1, the voltage BATT and the voltage VB are respectively converted by a transformer 8 into about 5 V, which is supplied to elements in the ECU 1 such as the microcomputer 4, and clock IC 9.

The power supply relay 7 has a configuration capable of supplying power by an OR circuit using a diode as shown in the figure, and can be turned on by way of an alarm output by the clock IC 9 or the microcomputer 4, in addition to the IGN 6. Diagnosis of the power supply by means of each output cannot be performed unless the other outputs are off.

The microcomputer 4 is well known per se and includes a CPU, ROM, RAM, IO and the like.

Hereafter, a description is given of a case as an example where the ECU 1 turns off the system IGN 6 on the basis of a time measured by the clock IC 9, starts up at a scheduled time, and diagnoses whether or not the low-tension battery 5 can be charged by the battery charger 10 using electric power of the high-tension battery 2.

The microcomputer 4 in the ECU 1 transmits via a communication line 11 an instruction to an inverter 13 controlling a motor 12 or the battery charger 10 and an operation state to a meter 14.

The microcomputer 4 is continuously fed with the power by the power supply relay 7 even if the IGN 6 is turned off, which allows the control to be continued even after the IGN 6 is turned off.

The clock IC 9 continues to measure a time regardless of on/off of the IGN 6. The clock IC 9 outputs the measured time through serial communication to the microcomputer 4 in response to a request from the microcomputer 4.

The clock IC 9 which has an alarm function starts up the microcomputer 4 at a scheduled time set before the IGN 6 is turned off to instruct the battery charger 3 through serial communication to charge the high-tension battery 2, or instruct the battery charger 10 through serial communication to charge the low-tension battery 5 using the electric power of the high-tension battery 2.

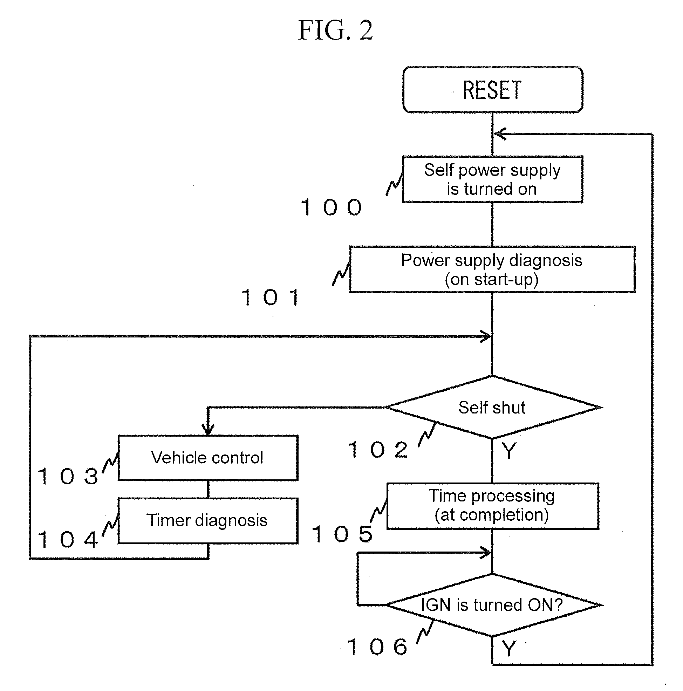

Hereinafter, a description is given of an example of a program (processing procedure) executed by the microcomputer 4 which is associated with diagnosis on the power supply function by means of the alarm function from when the IGN 6 is turned on until after turned off with reference to flowcharts and the like in Figure 2 to Figure 5.

Figure 2 is a flowchart showing an example of a program executed when the IGN 6 is turned on.

Here, firstly, at step 100, the power supply relay 7 is turned on for ensuring the electric power to be fed even after the IGN 6 is turned off until the required processing is completed.

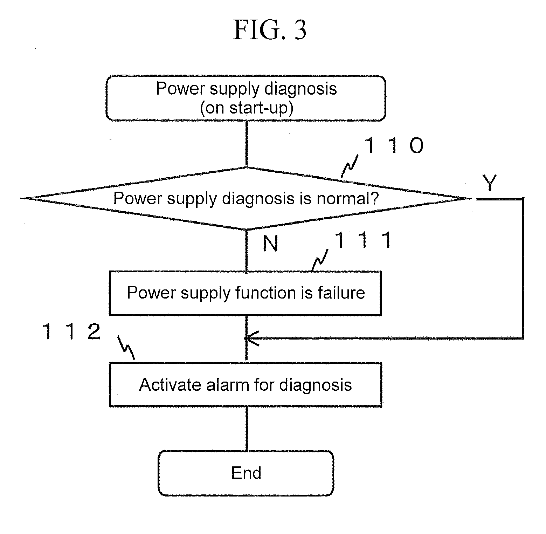

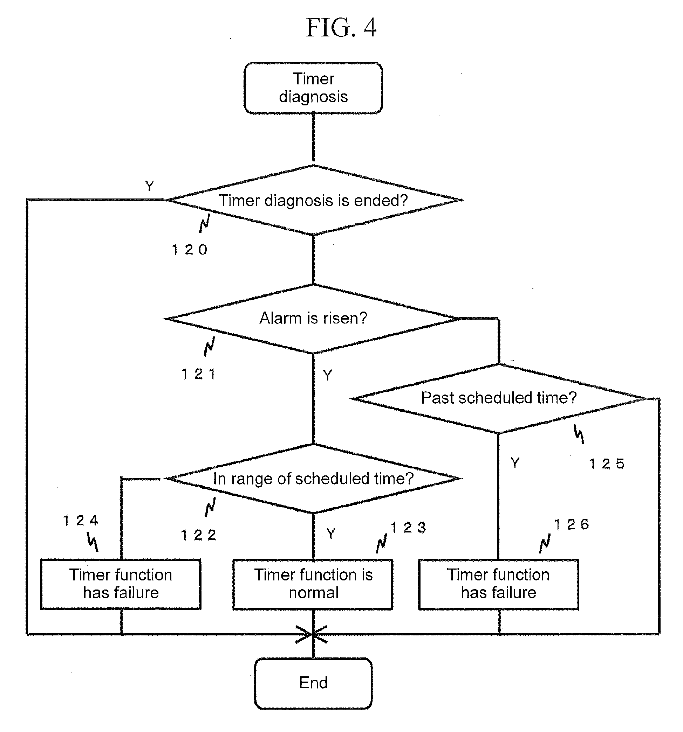

At subsequent step 101, the power supply diagnosis on start-up and the power supply function by means of an alarm signal shown in Figure 3 are checked. At step 102 in Figure 2, whether or not the IGN 6 is turned off is determined, and if it is determined to be not turned off, at step 103 instruction arithmetic for vehicle control is performed through regular processing every 10 msecs with respect to the motor 12 and the battery charger 10, and at step 104 (first means) timer diagnosis shown in Figure 4 that is described later is performed.

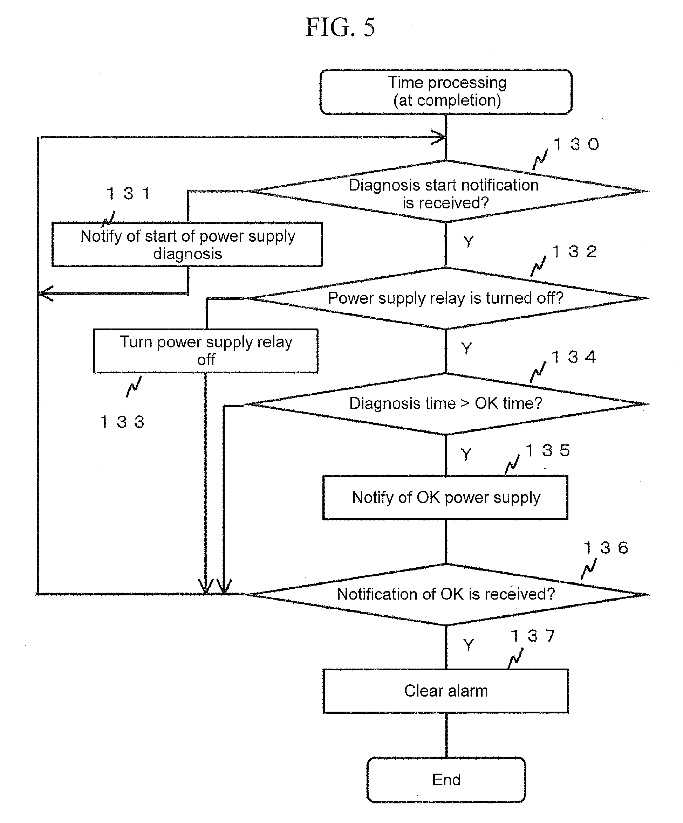

If it is determined to be turned off, the process proceeds to step 105 and performs time processing at completion shown in Figure 5 that is described later, that is, the diagnosis on the power supply function by means of the alarm function, to turn off the power supply relay 7.

At step 106, whether or not the IGN 6 is turned on is monitored until the power supply is ceased, and if it is turned on, the process returns to step 100.

Next, a description is given of power supply diagnosis processing on start-up executed at step 101 in Figure 2 with reference to the flowchart shown in Figure 3.

At step 110, it is determined whether or not at step 105 the diagnosis on the power supply function is completed with diagnosis of normality, and if it is not completed with diagnosis of normality, at step 111 failure is stored in the power supply function. Failure information is transmitted by the communication line 11 to the meter 14 to induce the driver to repair. At step 112, an alarm for the timer diagnosis at step 104 is set and activated.

A description is given of timer diagnosis processing executed at step 104 in Figure 2 with reference to the flowchart shown in Figure 4.

At step 120, whether or not the timer diagnosis is ended, is determined, and if not ended, at step 121 it is determined whether or not an alarm output has risen in a state where a timer coincides with the alarm set time.

If the condition at step 121 is true, it is determined at step 122 whether or not the risen alarm is in a range of the scheduled time, and "normality" is stored at step 123 in a case of being true and "abnormality" is stored at step 124 in a case of being false. The risen alarm is not cleared and is remained as it is for the time processing at completion at step 105 that is described later (second means).

At step 125, it is determined whether or not an alarm is not issued even though it is past the scheduled time, and "abnormality" is stored at step 126 in a case of being true. Abnormality information is transmitted by the communication line 11 to the meter 14 to induce the driver to repair.

A description is given of the time processing at completion executed at step 105 in Figure 2, that is, the diagnosis on the power supply function by means of the alarm function with reference to the flowchart shown in Figure 5.

At step 130, it is determined whether or not the meter 14 returns acknowledgement of receipt of a start notification responding to receipt of a notification of diagnosis start transmitted by the ECU 1. If the acknowledgement of receipt of the start notification is not returned, at step 131 the start notification of the power supply diagnosis is transmitted to the meter 14.

At step 132, assuming that the meter 14 monitors the power supply function by way of the alarm output by the clock IC 9, it is determined whether or not an output from the microcomputer 4 to the power supply relay 7 is turned off. In a case of being false, at step 133 the output from the microcomputer 4 to the power supply relay 7 is turned off to start to measure a lapse time.

At step 134, it is determined whether or not the lapse time is past an OK time, and in a case of being true, at step 135 (third means) stored is that the power supply function by way of the alarm output by the clock IC 9 is "normal", and "normality" is transmitted by the communication line 11 to the meter 14. The stored "normality" is used for determination at step 110.

If at step 136 it is determined that acknowledgement of receipt of a "normality" notification is returned from the meter 14, at step 137 the alarm output by the clock IC 9 is cleared and the power supply relay 7 is turned off.

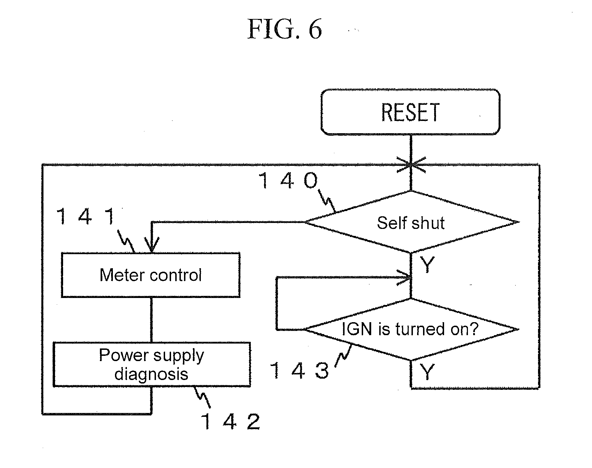

The flowchart shown in Figure 5 is a process associated with the meter 14, and therefore, processing of the meter 14 (monitor means) is shown in Figure 6.

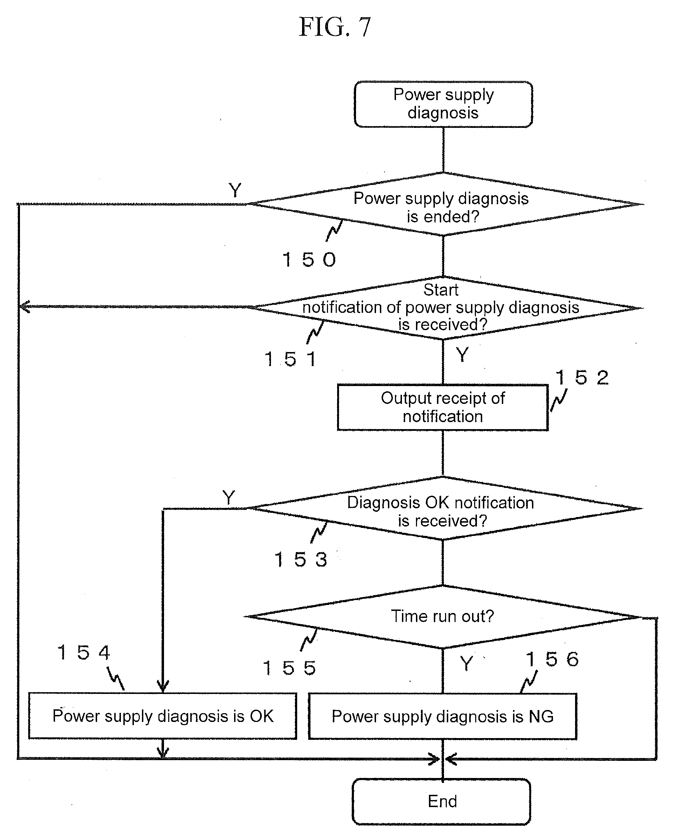

At step 140 in Figure 6, whether or not the meter 14 is stopped is determined, and if determined to be not stopped, at step 141 meter control is performed through regular processing every 10 msecs and at step 142 power supply diagnosis shown in Figure 7 that is described later is performed.

If determined to be stopped, the process proceeds to step 143, and whether or not the IGN 6 is turned on is monitored until the power supply is ceased, and if it is turned on, the process returns to step 140.

A description is given of the power supply diagnosis processing executed at step 142 in Figure 6, that is, the diagnosis on the power supply function by means of the alarm function with reference to the flowchart shown in Figure 7.

At step 150, it is determined whether or not the diagnosis on the power supply function of the ECU 1 is completed. In a case of being false, at step 151 it is determined whether or not the start notification of the power supply diagnosis transmitted at step 131 is received. In a case of being true, at step 152 the receipt of the start notification is notified to the ECU 1.

At step 153, it is determined whether or not the "normality" notification transmitted at step 135 is received. In a case of being true, at step 154 the receipt of "normality" notification is notified to the ECU 1.

At step 155, it is determined whether or not the power supply function by means of the alarm function does not work and the time runs out because the ECU 1 is stopped. In a case of being true, it is determined at step 156 (by means for prohibiting devices from stopping) that the power supply function by means of the alarm function has a failure, and display and sound by the meter 14 induce the driver to repair. The battery charger 10 is instructed via the communication line 11 to continuously charge the low-tension battery 5 without stopping even during the IGN 6 is off.

The vehicle control device (ECU 1) according to this embodiment as described above can diagnose the timer function in advance and remains the alarm output by the clock IC 9 which is output on diagnosis with no change to diagnose the power supply function in a short time. Even in the case of failure, the driver is induced to repair before he/she leaves a driver's seat, preventing poor charge of the high-tension battery 2 and low-tension battery 5 caused by unavailability of the alarm output.

This embodiment is for an electric vehicle running on the electric power of the high-tension battery 2 charged by the battery charger 3, but also has a similar effect on an electric vehicle running on electric power generated by a fuel cell.

### Industrial Applicability

The present invention is not limited to the control device (ECU) 1 for a vehicle, and can be applied to the diagnosis on the power supply function by means of the alarm output for a system which is started up at a desired time for controlling.

### Reference Signs List

- 1: ECU
- 2: high-tension battery
- 3: battery charger
- 4: microcomputer
- 5: low-tension battery
- 6: IGN
- 7: power supply relay
- 8: transformer
- 9: clock IC
- 10: battery charger
- 11: communication line
- 12: motor
- 13: inverter
- 14: meter

## Claims

1. An electric vehicle control device having at least a start signal for a vehicle and an alarm signal by a clock as means for initiating power supply, comprising:
first means that checks an output of the alarm signal by the clock after start-up by the power supply;
second means that holds the output of the alarm signal until start signals other than the alarm are all turned off; and
third means that notifies of the power supply being continued by way of the alarm signal whose output is held after the start signals other than the alarm are turned off.

2. The electric vehicle control device according to Claim 1, comprising:
monitor means including at least
means that monitors a notification signal notifying of the power supply being continued,
means that issues a warning by means of display or sound if there is no notification signal, and
second power supply means different from the power supply means.

3. The electric vehicle control device according to Claim 2, comprising:
means that prohibits devices from stopping if the monitor means issues a warning, the stopping being caused by the start signals other than the alarm being all turned off.
